# EUROPEAN PATENT APPLICATION

(11) **EP 2 983 120 A1**
(43) Date of publication of application: **10.02.2016**
(21) Application number: 13885674.5
(22) Date of filing: 31.05.2013
(51) Int. Cl.: G06Q 20/32

(54) **TRANSFER INFORMATION PROCESSING METHOD AND DEVICE**

(71) Applicant: Huawei Technologies Co., Ltd., Longgang District Shenzhen, Guangdong 518129 (CN)
(72) Inventor: DUAN, Zhiyong, Shenzhen Guangdong 518129 (CN)
(74) Representative: Goddar, Heinz J.
(86) International application number: PCT/CN2013/076554
(87) International publication number: WO 2014/190542

(57) **Abstract**

Embodiments of the present invention provide a transfer information processing method and device. The method includes: sending, by a first terminal device, a transfer request to a payment server, where the transfer request includes a first session identifier, and the first session identifier is used to identify first account information with which login is performed at the first terminal device; receiving, by the first terminal device, second account information that is sent according to the transfer request by the payment server, where the second account information is account information that is determined by the payment server according to the second session identifier after the payment server receives a payee account prompt message that is sent by a second terminal device and that includes a second session identifier; and sending, by the first terminal device, a transfer confirmation request to the payment server according to the second account information, so that the payment server performs transfer processing according to the first account information corresponding to the first session identifier, and the second account information, so as to make it convenient for a user to determine a transfer object when making a transfer.

## Description

### TECHNICAL FIELD

Embodiments of the present invention relate to the field of communications technologies, and in particular, to a transfer information processing method and device.

### BACKGROUND

Mobile payment means that a user pays for consumed goods or services through transfer by using a mobile terminal of the user. When making a mobile payment, a user needs to enter a bank account of a transfer object to complete a transfer.

In the prior art, a bank account of a transfer object may be bound with a mobile phone number in advance, and during mobile payment, a mobile phone number of a peer party is entered, so as to complete a transfer; or a card reader may be attached to a mobile phone of a payer, and a bankcard of a transfer object is swiped on the card reader to obtain a bank account of the transfer object, so as to complete a transfer.

However, when entering a mobile phone number of a transfer object, a user may enter a wrong number by mistake; whereas attaching a card reader to a mobile phone requires hardware support for a card reader, and also needs a bankcard of a transfer object, which is very inconvenient. Therefore, it is urgent to provide a transfer method that makes it convenient to determine a transfer object.

### SUMMARY

Embodiments of the present invention provide a transfer information processing method and device, so as to make it convenient for a user to determine a transfer object when making a transfer.

According to a first aspect, an embodiment of the present invention provides a transfer information processing method, including:
sending, by a first terminal device, a transfer request to a payment server, where the transfer request includes a first session identifier, and the first session identifier is used to identify first account information with which login is performed at the first terminal device;
receiving, by the first terminal device, second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device; and
sending, by the first terminal device, a transfer confirmation request to the payment server according to the second account information, so that the payment server performs transfer processing according to the first account information corresponding to the first session identifier, and the second account information.

In a first possible implementation manner of the first aspect, the transfer request further includes information about a first location where the first terminal device is located; and
the receiving, by the first terminal device, second account information that is sent according to the transfer request by the payment server, where the second account information is account information that is determined by the payment server according to the second session identifier after the payment server receives a payee account prompt message that is sent by a second terminal device and that includes a second session identifier includes:
receiving, by the first terminal device, the second account information that is sent according to the transfer request by the payment server, where the second account information is account information that is determined by the payment server according to the second session identifier, the first location information, and the second location information after the payment server receives a payee account prompt message that is sent by the second terminal device and that includes the second session identifier and information about a second location where the second terminal device is located, and a distance between the first location information and the second location information is within a preset range.

With reference to the first aspect and the first possible implementation manner, in a second possible implementation manner, the sending, by a first terminal device, a transfer request to a payment server includes:
sending, by the first terminal device, the transfer request to the payment server by means of shaking, turning upside down, or rotating.

According to a second aspect, an embodiment of the present invention provides a transfer information processing method, including:
generating, by a second terminal device, a payee account prompt message, where the payee account prompt message includes a second session identifier, and the second session identifier is used to identify second account information with which login is performed at the second terminal device; and
sending, by the second terminal device, the payee account prompt message to a payment server, so that after receiving a transfer request sent by a first terminal device, the payment server determines the second account information according to the second session identifier, and sends the second account information to the first terminal device.

In a first possible implementation manner of the second aspect, the generating, by a second terminal device, a payee account prompt message, where the payee account prompt message includes a second session identifier includes:
generating, by the second terminal device, a payee account prompt message, where the payee account prompt message includes the second session identifier and information about a second location where the second terminal device is located; and
the sending, by the second terminal device, the payee account prompt message to a payment server, so that after receiving a transfer request sent by a first terminal device, the payment server determines the second account information according to the second session identifier, and sends the second account information to the first terminal device includes:
   sending, by the second terminal device, the payee account prompt message to the payment server, so that after receiving the transfer request that is sent by the first terminal device and that includes information about a first location where the first terminal device is located, the payment server determines the second account information according to the second session identifier, the first location information, and the second location information, and sends the second account information to the first terminal device, where a distance between the first location information and the second location information is within a preset range.

With reference to the second aspect and the first possible implementation manner, in a second possible implementation manner, the sending, by the second terminal device, the payee account prompt message to the payment server includes:
sending, by the second terminal device, the payee account prompt message to the payment server within a preset period of time, where the preset period of time is a preset time interval between a time when the payment server receives the transfer request and a time when the payment server receives the payee account prompt message.

With reference to the second aspect to the second possible implementation manner, in a third possible implementation manner, the sending, by the second terminal device, the payee account prompt message to the payment server includes:
sending, by the second terminal device, the payee account prompt message to the payment server by means of shaking, turning upside down, or rotating.

According to a third aspect, an embodiment of the present invention provides a transfer information processing method, including:
receiving, by a payment server, a transfer request sent by a first terminal device, where the transfer request includes a first session identifier, and the first session identifier is used to identify first account information with which login is performed at the first terminal device;
receiving, by the payment server, a payee account prompt message sent by a second terminal device, where the payee account prompt message includes a second session identifier, and the second session identifier is used to identify second account information with which login is performed at the second terminal device;
determining, by the payment server, the second account information according to the second session identifier, and sending the second account information to the first terminal device; and
receiving, by the payment server, a transfer confirmation request sent according to the second account information by the first terminal device, and performing transfer processing according to the first account information corresponding to the first session identifier, and the second account information.

In a first possible implementation manner of the third aspect, the transfer request further includes first location information corresponding to a first location where the first terminal device is located; and the payee account prompt message further includes second location information corresponding to a second location where the second terminal device is located; and
the determining, by the payment server, the second account information according to the second session identifier, and sending the second account information to the first terminal device includes:
determining, by the payment server, the second account information according to the second session identifier, the first location information, and the second location information, and sending the second account information to the first terminal device.

According to the first possible implementation manner of the third aspect, in a second possible implementation manner, the determining, by the payment server, the second account information according to the second session identifier, the first location information, and the second location information includes:
if a distance between the second location information and the first location information is within a preset range, determining the second account information corresponding to the second session identifier.

With reference to the third aspect to the second possible implementation manner, in a third possible implementation manner, the receiving, by the payment server, a payee account prompt message sent by a second terminal device includes:
receiving, by the payment server within a preset period of time, the payee account prompt message sent by the second terminal device, where the preset period of time is a preset time interval between a time when the payment server receives the transfer request and a time when the payment server receives the payee account prompt message.

With reference to the third aspect to the third possible implementation manner, in a fourth possible implementation manner, the performing, by the payment server, transfer processing according to the first account information corresponding to the first session identifier, and the second account information includes:
sending, by the payment server, a transfer processing request to a transfer processing system, where the transfer processing request includes the first account information, transfer amount information, and the second account information, so that the transfer processing system transfers, from an account corresponding to the first account information to an account corresponding to the second account information, an amount corresponding to the transfer amount information.

According to a fourth aspect, an embodiment of the present invention provides a terminal device, including:
a sending module, configured to send a transfer request to a payment server, where the transfer request includes a first session identifier, and the first session identifier is used to identify first account information with which login is performed at a first terminal device;
a receiving module, configured to receive second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device; and
a transfer processing module, configured to send a transfer confirmation request to the payment server according to the second account information, so that the payment server performs transfer processing according to the first account information corresponding to the first session identifier, and the second account information.

In a first possible implementation manner of the fourth aspect, the transfer request further includes first location information of the terminal device; and
the receiving module is specifically configured to receive the second account information sent by the payment server, where the second account information is account information that is determined by the payment server according to the second session identifier, the first location information, and the second location information after the payment server receives a payee account prompt message that is sent by the second terminal device and that includes the second session identifier and information about a second location where the second terminal device is located, and a distance between the first location information and the second location information is within a preset range.

With reference to the fourth aspect and the first possible implementation manner, in a second possible implementation manner, the transfer processing module is specifically configured to:
send the transfer request to the payment server by means of shaking, turning upside down, or rotating.

According to a fifth aspect, an embodiment of the present invention provides a terminal device, including:
a prompt message generating module, configured to generate a payee account prompt message, where the payee account prompt message includes a second session identifier, and the second session identifier is used to identify second account information with which login is performed at the second terminal device; and
a sending module, configured to send the payee account prompt message to a payment server, so that after receiving a transfer request sent by a first terminal device, the payment server determines the second account information according to the second session identifier, and sends the second account information to the first terminal device.

In a first possible implementation manner of the fifth aspect, the prompt message generating module is specifically configured to generate the payee account prompt message, where the payee account prompt message includes the second session identifier and information about a second location where the terminal device is located; and
the sending module is specifically configured to send the payee account prompt message to the payment server, so that after receiving the transfer request that is sent by the first terminal device and that includes information about a first location where the first terminal device is located, the payment server determines the second account information according to the second session identifier, the first location information, and the second location information, and sends the second account information to the first terminal device, where a distance between the first location information and the second location information is within a preset range.

With reference to the fifth aspect and the first possible implementation manner, in a second possible implementation manner, the sending module is specifically configured to send the payee account prompt message to the payment server within a preset period of time, where the preset period of time is a preset time interval between a time when the payment server receives the transfer request and a time when the payment server receives the payee account prompt message.

With reference to the fifth aspect to the second possible implementation manner, in a third possible implementation manner, the sending module is specifically configured to:
send the payee account prompt message to the payment server by means of shaking, turning upside down, or rotating.

According to a sixth aspect, an embodiment of the present invention provides a payment server, including:
a receiving module, configured to receive a transfer request sent by a first terminal device, where the transfer request includes a first session identifier, and the first session identifier is used to identify first account information with which login is performed at the first terminal device; and receive a payee account prompt message sent by a second terminal device, where the payee account prompt message includes a second session identifier, and the second session identifier is used to identify second account information with which login is performed at the second terminal device;
a sending module, configured to determine the second account information according to the second session identifier, and send the second account information to the first terminal device; and
a transfer processing module, configured to receive a transfer confirmation request sent according to the second account information by the first terminal device, and perform transfer processing according to the first account information corresponding to the first session identifier, and the second account information.

In a first possible implementation manner of the sixth aspect, the transfer request further includes first location information corresponding to a first location where the first terminal device is located; and the payee account prompt message further includes second location information corresponding to a second location where the second terminal device is located; and
the sending module is specifically configured to determine the second account information according to the second session identifier, the first location information, and the second location information, and the sending module sends the second account information to the first terminal device.

According to the first possible implementation manner of the sixth aspect, in a second possible implementation manner, the sending module is specifically configured to:
if a distance between the second location information and the first location information is within a preset range, determine the second account information corresponding to the second session identifier.

With reference to the sixth aspect to the second possible implementation manner, in a third possible implementation manner, the receiving module is specifically configured to:
receive, within a preset period of time, the payee account prompt message sent by the second terminal device, where the preset period of time is a preset time interval between a time when the payment server receives the transfer request and a time when the payment server receives the payee account prompt message.

With reference to the sixth aspect to the third possible implementation manner, in a fourth possible implementation manner, the transfer processing module is specifically configured to:
send a transfer processing request to a transfer processing system, where the transfer processing request includes the first account information, transfer amount information, and the second account information, so that the transfer processing system transfers, from an account corresponding to the first account information to an account corresponding to the second account information, an amount corresponding to the transfer amount information.

According to a seventh aspect, an embodiment of the present invention provides a terminal device, including:
a transmitter, configured to send a transfer request to a payment server, where the transfer request includes a first session identifier, and the first session identifier is used to identify first account information with which login is performed at a first terminal device;
a receiver, configured to receive second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device; and
a processor, configured to send a transfer confirmation request to the payment server according to the second account information, so that the payment server performs transfer processing according to the first account information corresponding to the first session identifier, and the second account information.

In a first possible implementation manner of the seventh aspect, the transfer request further includes first location information of the terminal device; and
the receiver is specifically configured to receive the second account information sent by the payment server, where the second account information is account information that is determined by the payment server according to the second session identifier, the first location information, and the second location information after the payment server receives a payee account prompt message that is sent by the second terminal device and that includes the second session identifier and information about a second location where the second terminal device is located, and a distance between the first location information and the second location information is within a preset range.

With reference to the seventh aspect and the first possible implementation manner, in a second possible implementation manner, the processor is specifically configured to:
send the transfer request to the payment server by means of shaking, turning upside down, or rotating.

According to an eighth aspect, an embodiment of the present invention provides a terminal device, including:
a processor, configured to generate a payee account prompt message, where the payee account prompt message includes a second session identifier, and the second session identifier is used to identify second account information with which login is performed at the second terminal device; and
a transmitter, configured to send the payee account prompt message to a payment server, so that after receiving a transfer request sent by a first terminal device, the payment server determines the second account information according to the second session identifier, and sends the second account information to the first terminal device.

In a first possible implementation manner of the eighth aspect, the processor is specifically configured to generate the payee account prompt message, where the payee account prompt message includes the second session identifier and information about a second location where the terminal device is located; and
the transmitter is specifically configured to send the payee account prompt message to the payment server, so that after receiving the transfer request that is sent by the first terminal device and that includes information about a first location where the first terminal device is located, the payment server determines the second account information according to the second session identifier, the first location information, and the second location information, and sends the second account information to the first terminal device, where a distance between the first location information and the second location information is within a preset range.

With reference to the eighth aspect and the first possible implementation manner, in a second possible implementation manner, the transmitter is specifically configured to send the payee account prompt message to the payment server within a preset period of time, where the preset period of time is a preset time interval between a time when the payment server receives the transfer request and a time when the payment server receives the payee account prompt message.

With reference to the eighth aspect to the second possible implementation manner, in a third possible implementation manner, the transmitter is specifically configured to:
send the payee account prompt message to the payment server by means of shaking, turning upside down, or rotating.

According to a ninth aspect, an embodiment of the present invention provides a payment server, including:
a receiver, configured to receive a transfer request sent by a first terminal device, where the transfer request includes a first session identifier, and the first session identifier is used to identify first account information with which login is performed at the first terminal device; and receive a payee account prompt message sent by a second terminal device, where the payee account prompt message includes a second session identifier, and the second session identifier is used to identify second account information with which login is performed at the second terminal device;
a transmitter, configured to determine the second account information according to the second session identifier, and send the second account information to the first terminal device; and
a processor, configured to receive a transfer confirmation request sent according to the second account information by the first terminal device, and perform transfer processing according to the first account information corresponding to the first session identifier, and the second account information.

In a first possible implementation manner of the ninth aspect, the transfer request further includes first location information corresponding to a first location where the first terminal device is located; and the payee account prompt message further includes second location information corresponding to a second location where the second terminal device is located; and
the transmitter is specifically configured to determine the second account information according to the second session identifier, the first location information, and the second location information, and the sending module sends the second account information to the first terminal device.

According to the first possible implementation manner, in a second possible implementation manner, the transmitter is specifically configured to:
if a distance between the second location information and the first location information is within a preset range, determine the second account information corresponding to the second session identifier.

With reference to the ninth aspect to the second possible implementation manner, in a third possible implementation manner, the receiver is specifically configured to:
receive, within a preset period of time, the payee account prompt message sent by the second terminal device, where the preset period of time is a preset time interval between a time when the payment server receives the transfer request and a time when the payment server receives the payee account prompt message.

With reference to the ninth aspect to the third possible implementation manner, in a fourth possible implementation manner, the processor is specifically configured to:
send a transfer processing request to a transfer processing system, where the transfer processing request includes the first account information, transfer amount information, and the second account information, so that the transfer processing system transfers, from an account corresponding to the first account information to an account corresponding to the second account information, an amount corresponding to the transfer amount information.

According to the transfer information processing method and device provided by the embodiments of the present invention, a first terminal device sends a transfer request to a payment server, where the transfer request includes a first session identifier, a second terminal device sends a payee account prompt message including a second session identifier to the payment server, and the payment server determines second account information corresponding to the second terminal device according to the second session identifier, and sends the second account information to the first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently.

### BRIEF DESCRIPTION OF DRAWINGS

FIG. 1 is a flowchart of Embodiment 1 of a transfer information processing method according to the present invention;
FIG. 2 is a flowchart of Embodiment 2 of a transfer information processing method according to the present invention;
FIG. 3 is a flowchart of Embodiment 3 of a transfer information processing method according to the present invention;
FIG. 4 is a flowchart of Embodiment 4 of a transfer information processing method according to the present invention;
FIG. 5 is a signaling flowchart of an embodiment of a transfer information processing method according to the present invention;
FIG. 6 is a schematic structural diagram of Embodiment 1 of a terminal device according to the present invention;
FIG. 7 is a schematic structural diagram of Embodiment 2 of a terminal device according to the present invention;
FIG. 8 is a schematic structural diagram of Embodiment 1 of a payment server according to the present invention;
FIG. 9 is a schematic structural diagram of Embodiment 3 of a terminal device according to the present invention;
FIG. 10 is a schematic structural diagram of Embodiment 4 of a terminal device according to the present invention; and
FIG. 11 is a schematic structural diagram of Embodiment 2 of a payment server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In embodiments of the present invention, a first terminal device is a payer of a transfer, and a second terminal device is a payee of a transfer. Sequence numbers of the following embodiments of the present invention are for description only, and do not indict superiority of the embodiments.

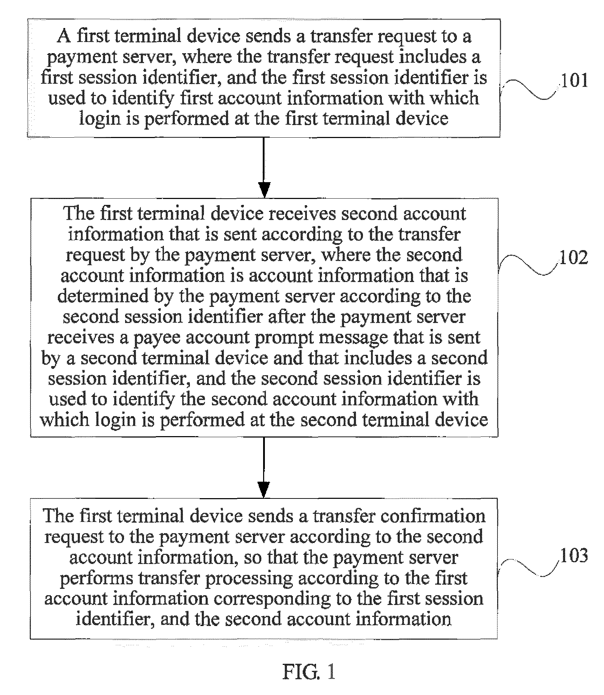

FIG. 1 is a flowchart of Embodiment 1 of a transfer information processing method according to the present invention. As shown in FIG. 1, the transfer information processing method provided by this embodiment of the present invention is executed by a first terminal device. The transfer information processing method according to this embodiment may include:
S101: A first terminal device sends a transfer request to a payment server, where the transfer request includes a first session identifier, and the first session identifier is used to identify first account information with which login is performed at the first terminal device.
   Specifically, the first session identifier is used to enable the payment server to determine account information of the first terminal device. In a practical application process, the first terminal device may send the transfer request to the payment server by means of keying, or the first terminal device may send the transfer request to the payment server by means of shaking, turning upside down, or rotating, which is not limited by this embodiment. Optionally, transfer amount information may also be included in the transfer request to facilitate transfer processing of the payment server.
S102: The first terminal device receives second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device.
   In a specific implementation process, there may be one or more second terminal devices. When there are more second terminal devices, after receiving a plurality of payee account prompt messages, the payment server may determine account information according to session identifiers included in the plurality of payee account prompt messages, and send the account information in form of a list to the first terminal device, so that the first terminal device determines account information of a payee account.
S103: The first terminal device sends a transfer confirmation request to the payment server according to the second account information, so that the payment server performs transfer processing according to the first account information corresponding to the first session identifier, and the second account information.

Persons skilled in the art may understand that a user may choose by himself/herself whether to enter a password when confirming a transfer. If a user sets that a password needs to be entered, when the first terminal device sends a transfer confirmation request to the payment server according to the second account information, a preset password needs to be entered before a transfer is confirmed. This embodiment does not impose any limitation on whether a password needs to be entered when a transfer is confirmed.

According to the transfer information processing method provided by this embodiment, a first terminal device sends a transfer request to a payment server, where the transfer request includes a first session identifier, a second terminal device sends a payee account prompt message including a second session identifier to the payment server, and the payment server determines second account information corresponding to the second terminal device according to the second session identifier, and sends the second account information to the first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently.

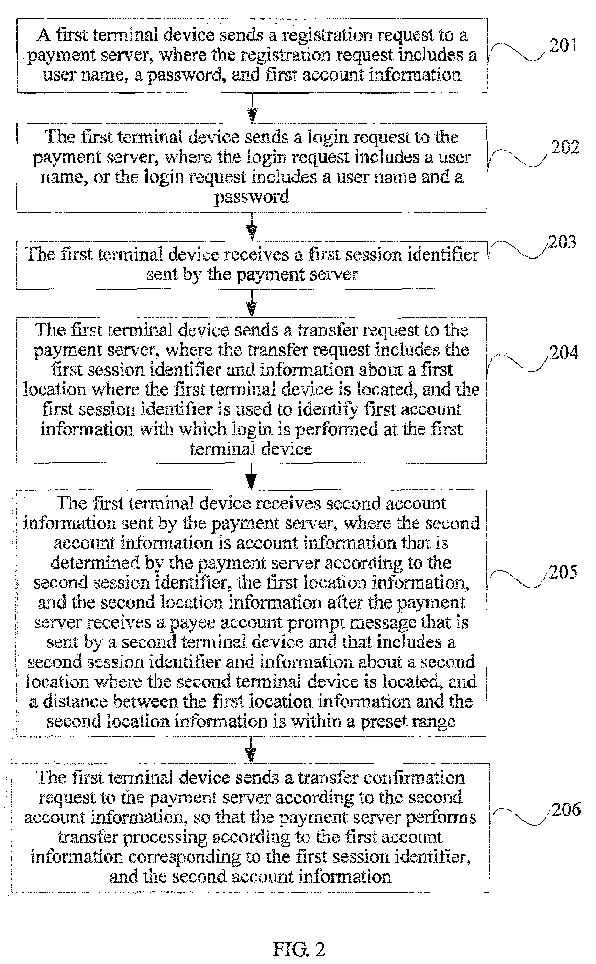

FIG. 2 is a flowchart of Embodiment 2 of a transfer information processing method according to the present invention. As shown in FIG. 2, the transfer information processing method provided by this embodiment of the present invention is executed by a first terminal device. On the basis of the foregoing embodiment, the transfer information processing method according to this embodiment may include:
S201: A first terminal device sends a registration request to a payment server, where the registration request includes a user name, a password, and first account information.
   Specifically, when a user uses the transfer information processing method, provided by this embodiment, for the first time to perform a transfer, the user needs to send the registration request to the payment server by using the first terminal device, where the registration request includes the user name, the password, and the first account information of the user, so that the payment server binds and saves the user name, the password, and the first account information, so as to avoid entering account information when making a transfer.
   It should be noted that the user name may be an account name of instant messaging software, or may be an email address, or may be a mobile phone number, which is not limited by this embodiment.
S202: The first terminal device sends a login request to the payment server, where the login request includes a user name, or the login request includes a user name and a password.
S203: The first terminal device receives a first session identifier sent by the payment server.
   It should be noted that the first session identifier is generated randomly. Each time after the first terminal device has logged in, the payment server generates randomly a first session identifier and sends the first session identifier to the first terminal device. The first session identifier is used to enable the payment server to determine account information of the first terminal device. It may be understood that the first session identifier may be set to expire after a specific period of time, so as to ensure security of the account information corresponding to the first terminal device.
S204: The first terminal device sends the transfer request to the payment server, where the transfer request includes the first session identifier and information about a first location where the first terminal device is located, and the first session identifier is used to identify first account information with which login is performed at the first terminal device.
S205: The first terminal device receives second account information sent by the payment server, where the second account information is account information that is determined by the payment server according to the second session identifier, the first location information, and the second location information after the payment server receives a payee account prompt message that is sent by a second terminal device and that includes a second session identifier and information about a second location where the second terminal device is located, and a distance between the first location information and the second location information is within a preset range.
   In a practical application process, a location where the first terminal device is located may also be added into the transfer request message, so that the payment server narrows a scope when determining the second account information to reduce a probability of misjudgment.
S206: The first terminal device sends a transfer confirmation request to the payment server according to the second account information, so that the payment server performs transfer processing according to the first account information corresponding to the first session identifier, and the second account information.

According to the transfer information processing method provided by this embodiment, after registering with and logging in to a payment server, a first terminal device sends a transfer request to the payment server, where the transfer request includes a first session identifier and information about a first location where the first terminal device is located, a second terminal device sends a payee account prompt message that includes a second session identifier and information about a second location where the second terminal device is located to the payment server, and the payment server determines second account information corresponding to the second terminal device according to the second session identifier, the first location information, and the second location information, and sends the second account information to the first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently, and a probability of misjudging the second account information can be reduced.

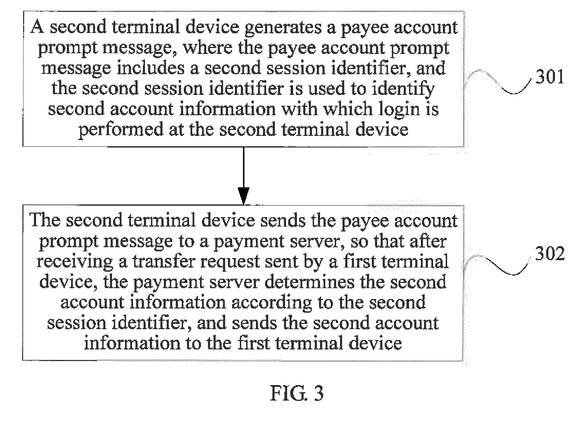

FIG. 3 is a flowchart of Embodiment 3 of a transfer information processing method according to the present invention. As shown in FIG. 3, the transfer information processing method provided by this embodiment of the present invention is executed by a second terminal device. The transfer information processing method according to this embodiment may include:
S301: A second terminal device generates a payee account prompt message, where the payee account prompt message includes a second session identifier, and the second session identifier is used to identify second account information with which login is performed at the second terminal device.
   In a feasible implementation manner, the payee account prompt message may also include information about a second location where the second terminal device is located, so that after receiving a transfer request that is sent by a first terminal device and that includes information about a first location where the first terminal device is located, the payment server may determine the second account information according to the second session identifier, the first location information, and the second location information.
   It should be noted that, before the second terminal device generates the payee account prompt message, the second terminal device sends a registration request to the payment server, where the registration request includes a user name, a password, and second account information. After the second terminal device sends the registration request to the payment server, the second terminal device sends a login request to the payment server, where the login request includes a user name, or the login request includes a user name and a password, where the user name may be an account name of instant messaging software, an email address, or a mobile phone number, which is not limited by this embodiment. After sending the login request to the payment server, the second terminal device receives the second session identifier sent by the payment server.
   In a practical application process, the second terminal device may send the payee account prompt message to the payment server by means of shaking, turning upside down, or rotating.
S302: The second terminal device sends the payee account prompt message to a payment server, so that after receiving a transfer request sent by a first terminal device, the payment server determines the second account information according to the second session identifier, and sends the second account information to the first terminal device.

Optionally, the second terminal device may send the payee account prompt message to the payment server within a preset period of time, so as to reduce time spent by the payment server in determining the second account information corresponding to the second terminal device, where the preset period of time is a preset time interval between a time when the payment server receives the transfer request and a time when the payment server receives the payee account prompt message.

According to the transfer information processing method provided by this embodiment, a second terminal device sends a payee account prompt message to a payment server, where the payee account prompt message includes a second session identifier, and the payment server determines second account information according to the second session identifier, and sends the second account information to a first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently.

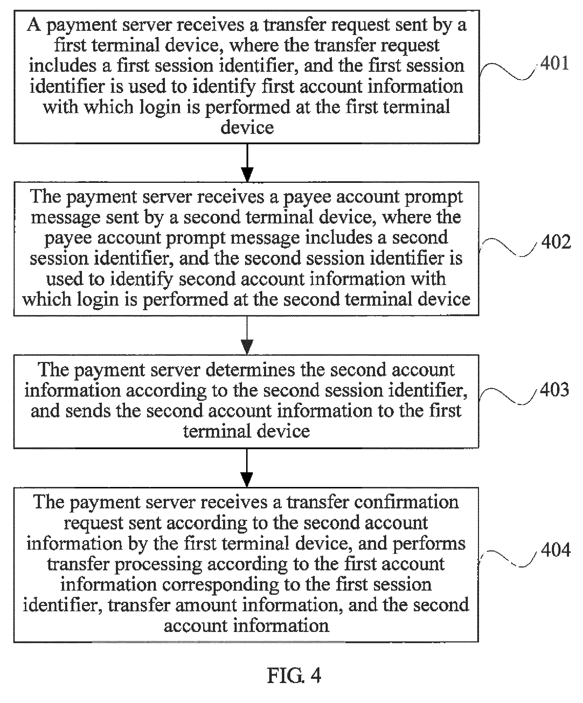

FIG. 4 is a flowchart of Embodiment 4 of a transfer information processing method according to the present invention. As shown in FIG. 4, the transfer information processing method provided by this embodiment of the present invention is executed by a payment server. The transfer information processing method according to this embodiment may include:
S401: A payment server receives a transfer request sent by a first terminal device, where the transfer request includes a first session identifier, and the first session identifier is used to identify first account information with which login is performed at the first terminal device.
   In a practical application process, before receiving the transfer request sent by the first terminal device, the payment server receives a registration request sent by the first terminal device, where the registration request includes a user name, a password, and the first account information; after receiving the registration request sent by the first terminal device, the payment server receives a login request sent by the first terminal device, where the login request includes a user name, or the login request includes a user name and a password. After receiving the login request sent by the first terminal device, the payment server sends the first session identifier to the first terminal device. The transfer request may further include transfer amount information to facilitate transfer processing of the payment server.
   Specifically, the user name may be an account name of instant messaging software, or may be an email address, or may be a mobile phone number, which is not limited by this embodiment.
S402: The payment server receives a payee account prompt message sent by a second terminal device, where the payee account prompt message includes a second session identifier, and the second session identifier is used to identify second account information with which login is performed at the second terminal device.
   In a practical application process, before receiving the transfer request sent by the second terminal device, the payment server receives a registration request sent by the second terminal device, where the registration request includes a user name, a password, and the second account information; after receiving the registration request sent by the second terminal device, the payment server receives a login request sent by the second terminal device, where the login request includes a user name, or the login request includes a user name and a password. After receiving the login request sent by the second terminal device, the payment server sends the second session identifier to the second terminal device.
   Specifically, the user name may be an account name of instant messaging software, or may be an email address, or may be a mobile phone number, which is not limited by this embodiment.
S403: The payment server determines the second account information according to the second session identifier, and sends the second account information to the first terminal device.
   In a feasible implementation manner, the payment server determines the second account information according to the second session identifier, and sends the second account information to the first terminal device.
   In another feasible implementation manner, the transfer request may include the first session identifier and first location information corresponding to a first location where the first terminal device is located, and the payee account prompt message includes the second session identifier and second location information corresponding to a second location where the second terminal device is located, and the payment server may determine the second account information according to the second session identifier, the first location information, and the second location information. Specifically, if a distance between the second location information and the first location information is within a preset range, the payment server may determine the second account information corresponding to the second session identifier, and send the second account information to the first terminal device.
   In still another feasible implementation manner, a preset period of time may be set, where the preset period of time is a preset time interval between a time when the payment server receives the transfer request and a time when the payment server receives the payee account prompt message. The payment server receives, within the preset period of time, the payee account prompt message sent by the second terminal device, and determines the second account information according to the second session identifier, the first location information, and the second location information, and sends the second account information to the first terminal device.
S404: The payment server receives a transfer confirmation request sent according to the second account information by the first terminal device, and performs transfer processing according to the first account information corresponding to the first session identifier, transfer amount information, and the second account information.

In a specific implementation process, when performing transfer processing according to the first account information, the transfer amount information, and the second account information, the payment server sends a transfer processing request to a transfer processing system, where the transfer processing request includes the first account information, the transfer amount information, and the second account information, so that the transfer processing system transfers, from an account corresponding to the first account information to an account corresponding to the second account information, an amount corresponding to the transfer amount information.

According to the transfer information processing method provided by this embodiment, by receiving a transfer request sent by a first terminal device, where the transfer request includes a first session identifier, and receiving a payee account prompt message sent by a second terminal device, where the payee account prompt message includes a second session identifier, a payment server determines second account information according to the second session identifier, and sends the second account information to the first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently.

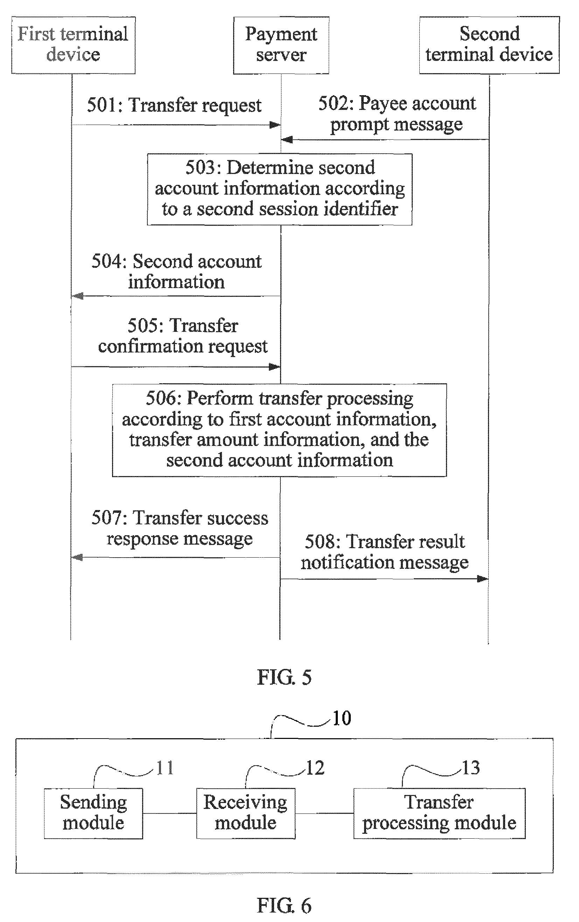

FIG 5 is a signaling flowchart of an embodiment of a transfer information processing method according to the present invention. As shown in FIG. 5, the transfer information processing method provided by this embodiment may include:
S501: A first terminal device sends a transfer request to a payment server.
S502: A second terminal device sends a payee account prompt message to the payment server.
S503: The payment server determines second account information according to a second session identifier.
S504: The payment server sends the second account information to the first terminal device.
S505: The first terminal device sends a transfer confirmation request to the payment server.
S506: The payment server performs transfer processing according to first account information, transfer amount information, and the second account information.
S507: The payment server sends a transfer success response message to the first terminal device.
S508: The payment server sends a transfer result notification message to the second terminal device.

It should be noted that, before making a payment by using the foregoing transfer information processing method, both the first terminal device and the second terminal device have registered with and logged in to the payment server, and the payment server stores account information corresponding to the first terminal device and account information corresponding to the second terminal device, and has sent the first session identifier and the second session identifier to the first terminal device and the second terminal device respectively.

In a specific implementation process, the first terminal device sends the transfer request to the payment server, where the transfer request includes the first session identifier, the transfer amount information, and information about a first location where the first terminal device is located, and after the payment server receives the transfer request, the payment server may receive, within a preset period of time, the payee account prompt message that is sent by the second terminal device and that includes the second session identifier and information about a second location where the second terminal device is located, and determine the second account information according to the second session identifier, the first location information, and the second location information, and the payment server sends the second account information to the first terminal device, and the first terminal device sends the transfer confirmation request to the payment server according to the received second account information, and after receiving the transfer confirmation request, the payment server performs transfer processing according to the first account information, the transfer amount information, and the second account information, and after completing the transfer processing, the payment server sends a transfer success response message to the first terminal device and sends a transfer result notification message to the second terminal device.

Persons skilled in the art may understand that the first terminal device may be a mobile phone, a tablet, or a computer, and the second terminal device may be a mobile phone, a tablet, a computer, or a POS terminal (POS, Point Of Sale), which are not limited by this embodiment.

Further, in a practical application process, there are the following three application scenarios: in a first scenario, there is one first terminal device and a plurality of second terminal devices, and in this case, a payment server sends multiple pieces of second account information in form of a list to the first terminal device for the first terminal device to determine which piece of account information is exactly a transfer object; in a second scenario, there is a plurality of first terminal devices and one second terminal device, for example, the second terminal device is a POS, and in this case, the POS may first send a payee account prompt message to a payment server, and then the first terminal devices send transfer requests to the payment server, and unlike the first scenario, in this case, the payment server sends second account information only to a first terminal device that is the first to send a transfer request, and then, subsequent steps are performed to complete transfer processing; and in a third scenario, there is a plurality of first terminal devices and a plurality of second terminal devices, and in this case, a payment server combines account information corresponding to the plurality of second terminal devices into a list, and sends the list to a first terminal device that is the first to send a transfer request.

According to the transfer information processing method provided by this embodiment, a first terminal device sends a transfer request to a payment server, where the transfer request includes a first session identifier and transfer amount information, a second terminal device sends a payee account prompt message to the payment server, where the payee account prompt message includes a second session identifier, and the payment server determines second account information according to the second session identifier, and sends the second account information to the first terminal device, so that the first terminal device determines, according to the second account information, whether a transfer object is the second terminal device, and if the transfer object is the second terminal device, the first terminal device sends a transfer confirmation request to the payment server to complete transfer processing. Thereby, a transfer object can be determined conveniently.

FIG. 6 is a schematic structural diagram of Embodiment 1 of a terminal device according to the present invention. As shown in FIG. 6, the terminal device 10 provided by this embodiment may include a sending module 11, a receiving module 12, and a transfer processing module 13, where
the sending module 11 is configured to send a transfer request to a payment server, where the transfer request includes a first session identifier, and the first session identifier is used to identify first account information with which login is performed at a first terminal device;
the receiving module 12 is configured to receive second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device; and
the transfer processing module 13 is configured to send a transfer confirmation request to the payment server according to the second account information, so that the payment server performs transfer processing according to the first account information corresponding to the first session identifier, and the second account information.

Optionally, the transfer request may further include first location information of the terminal device; and correspondingly, the receiving module 12 may be specifically configured to receive the second account information sent by the payment server, where the second account information is account information that is determined by the payment server according to the second session identifier, the first location information, and the second location information after the payment server receives a payee account prompt message that is sent by the second terminal device and that includes the second session identifier and information about a second location where the second terminal device is located, and a distance between the first location information and the second location information is within a preset range.

The transfer processing module 13 may specifically send the transfer request to the payment server by means of shaking, turning upside down, or rotating.

The terminal device provided by this embodiment is equivalent to the first terminal in the foregoing embodiments, and may be configured to execute the technical solution of the method embodiment shown in FIG. 1, and an implementation principle and technical effects of the terminal device are similar to those of the first terminal, which are not further described herein.

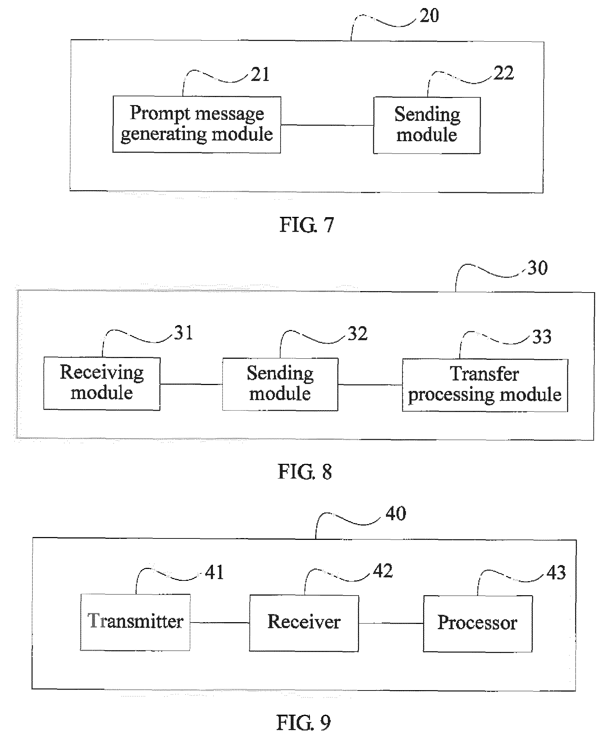

FIG. 7 is a schematic structural diagram of Embodiment 2 of a terminal device according to the present invention. As shown in FIG. 7, the terminal device 20 provided by this embodiment may include a prompt message generating module 21 and a sending module 22, where
the prompt message generating module 21 is configured to generate a payee account prompt message, where the payee account prompt message includes a second session identifier, and the second session identifier is used to identify second account information with which login is performed at the second terminal device; and
the sending module 22 is configured to send the payee account prompt message to a payment server, so that after receiving a transfer request sent by a first terminal device, the payment server determines the second account information according to the second session identifier, and sends the second account information to the first terminal device.

The prompt message generating module 21 may be specifically configured to generate the payee account prompt message that includes the second session identifier and information about a second location where the terminal device is located. The sending module 22 sends the payee account prompt message to the payment server, so that after receiving the transfer request that is sent by the first terminal device and that includes information about a first location where the first terminal device is located, the payment server determines the second account information according to the second session identifier, the first location information, and the second location information, and sends the second account information to the first terminal device. Specifically, a distance between the first location information and the second location information is within a preset range.

Optionally, the sending module 22 sends the payee account prompt message to the payment server within a preset period of time, so as to reduce time spent by the payment server in determining the second account information corresponding to the second terminal device, where the preset period of time is a preset time interval between a time when the payment server receives the transfer request and a time when the payment server receives the payee account prompt message.

The sending module 22 may be specifically configured to send the payee account prompt message to the payment server by means of shaking, turning upside down, or rotating.

The terminal device provided by this embodiment is equivalent to the second terminal in the foregoing embodiments, and may be configured to execute the technical solution of the foregoing method embodiments, and an implementation principle and technical effects of the terminal device are similar to those of the second terminal, which are not further described herein.

It should be noted that one terminal may have functions of both a first terminal and a second terminal.

FIG. 8 is a schematic structural diagram of Embodiment 1 of a payment server according to the present invention. As shown in FIG. 8, a payment server 30 provided by this embodiment may include a receiving module 31, a sending module 32, and a transfer processing module 33, where
the receiving module 31 is configured to receive a transfer request sent by a first terminal device, where the transfer request includes a first session identifier, and the first session identifier is used to identify first account information with which login is performed at the first terminal device; and receive a payee account prompt message sent by a second terminal device, where the payee account prompt message includes a second session identifier, and the second session identifier is used to identify second account information with which login is performed at the second terminal device;
the sending module 32 is configured to determine the second account information according to the second session identifier, and send the second account information to the first terminal device; and
the transfer processing module 33 is configured to receive a transfer confirmation request sent according to the second account information by the first terminal device, and perform transfer processing according to the first account information corresponding to the first session identifier, and the second account information.

Optionally, the transfer request received by the receiving module 31 may further include first location information corresponding to a first location where the first terminal device is located; and the payee account prompt message received by the receiving module 31 may further include second location information corresponding to a second location where the second terminal device is located; and correspondingly, the sending module 32 determines the second account information according to the second session identifier, the first location information, and the second location information, and the sending module 32 sends the second account information to the first terminal device. Specifically, if a distance between the second location information and the first location information is within a preset range, the second account information corresponding to the second session identifier is determined, so as to reduce a probability of misjudgment by the payment server.

In another feasible implementation manner, the receiving module 31 receives, within a preset period of time, the payee account prompt message sent by the second terminal device, so as to reduce time spent by the payment server in determining the second account information corresponding to the second terminal device, where the preset period of time is a preset time interval between a time when the payment server receives the transfer request and a time when the payment server receives the payee account prompt message.

After the receiving module 31 receives the transfer confirmation request sent according to the second account information by the first terminal device, specifically, the transfer processing module 33 sends a transfer processing request to a transfer processing system, where the transfer processing request includes the first account information, transfer amount information, and the second account information, so that the transfer processing system transfers, from an account corresponding to the first account information to an account corresponding to the second account information, an amount corresponding to the transfer amount information, so as to complete a transfer information processing process.

The payment server provided by this embodiment may be configured to execute the technical solution of the foregoing method embodiments and has a similar implementation principle and similar technical effects, which are not further described herein.

FIG 9 is a schematic structural diagram of Embodiment 3 of a terminal device according to the present invention. As shown in FIG. 9, the terminal device 40 provided by this embodiment may include a transmitter 41, a receiver 42, and a processor 43, where
the transmitter 41 is configured to send a transfer request to a payment server, where the transfer request includes a first session identifier, and the first session identifier is used to identify first account information with which login is performed at a first terminal device;
the receiver 42 is configured to receive second account information that is sent according to the transfer request by the payment server, where the second account information is account information that is determined by the payment server according to the second session identifier after the payment server receives a payee account prompt message that is sent by a second terminal device and that includes a second session identifier, and the second session identifier is used to identify the second account information with which login is performed at the second terminal device; and
the processor 43 is configured to send a transfer confirmation request to the payment server according to the second account information, so that the payment server performs transfer processing according to the first account information corresponding to the first session identifier, and the second account information.

Optionally, the transfer request may further include first location information of the terminal device; and correspondingly, the receiver 42 may be specifically configured to receive the second account information sent by the payment server, where the second account information is account information that is determined by the payment server according to the second session identifier, the first location information, and the second location information after the payment server receives a payee account prompt message that is sent by the second terminal device and that includes the second session identifier and information about a second location where the second terminal device is located, and a distance between the first location information and the second location information is within a preset range.

The processor 43 may specifically send the transfer request to the payment server by means of shaking, turning upside down, or rotating.

The terminal device provided by this embodiment is equivalent to the first terminal in the foregoing embodiments, and may be configured to execute the technical solution of the foregoing method embodiments, and an implementation principle and technical effects of the terminal device are similar to those of the first terminal, which are not further described herein.

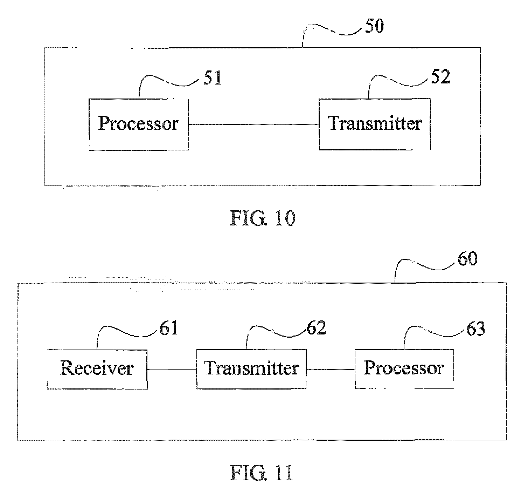

FIG. 10 is a schematic structural diagram of Embodiment 4 of a terminal device according to the present invention. As shown in FIG. 10, the terminal device 50 provided by this embodiment may include a processor 51 and a transmitter 52, where
the processor 51 is configured to generate a payee account prompt message, where the payee account prompt message includes a second session identifier, and the second session identifier is used to identify second account information with which login is performed at a second terminal device; and
the transmitter 52 is configured to send the payee account prompt message to a payment server, so that after receiving a transfer request sent by a first terminal device, the payment server determines the second account information according to the second session identifier, and sends the second account information to the first terminal device.

The processor 51 may be specifically configured to generate the payee account prompt message that includes the second session identifier and information about a second location where the terminal device is located. The transmitter 52 sends the payee account prompt message to the payment server, so that after receiving the transfer request that is sent by the first terminal device and that includes information about a first location where the first terminal device is located, the payment server determines the second account information according to the second session identifier, the first location information, and the second location information, and sends the second account information to the first terminal device. Specifically, a distance between the first location information and the second location information is within a preset range.

Optionally, the transmitter 52 sends the payee account prompt message to the payment server within a preset period of time, so as to reduce time spent by the payment server in determining the second account information corresponding to the second terminal device, where the preset period of time is a preset time interval between a time when the payment server receives the transfer request and a time when the payment server receives the payee account prompt message.

The transmitter 52 may be specifically configured to send the payee account prompt message to the payment server by means of shaking, turning upside down, or rotating.

The terminal device provided by this embodiment is equivalent to the second terminal in the foregoing embodiments, and may be configured to execute the technical solution of the foregoing method embodiments, and an implementation principle and technical effects of the terminal device are similar to those of the second terminal, which are not further described herein.

It should be noted that one terminal may have functions of both a first terminal and a second terminal.

FIG. 11 is a schematic structural diagram of Embodiment 2 of a payment server according to the present invention. As shown in FIG. 11, the payment server 60 provided by this embodiment may include a receiver 61, a transmitter 62, and a processor 63, where
the receiver 61 is configured to receive a transfer request sent by a first terminal device, where the transfer request includes a first session identifier, and the first session identifier is used to identify first account information with which login is performed at the first terminal device; and receive a payee account prompt message sent by a second terminal device, where the payee account prompt message includes a second session identifier, and the second session identifier is used to identify second account information with which login is performed at the second terminal device;
the transmitter 62 is configured to determine the second account information according to the second session identifier, and the transmitter 63 sends the second account information to the first terminal device; and
the processor 63 is configured to receive a transfer confirmation request sent according to the second account information by the first terminal device, and perform transfer processing according to the first account information corresponding to the first session identifier, and the second account information.

Optionally, the transfer request received by the receiver 61 may further include first location information corresponding to a first location where the first terminal device is located; and the payee account prompt message received by the receiver 61 may further include second location information corresponding to a second location where the second terminal device is located; and correspondingly, the transmitter 62 determines the second account information according to the second session identifier, the first location information, and the second location information, and the transmitter 62 sends the second account information to the first terminal device. Specifically, if a distance between the second location information and the first location information is within a preset range, the second account information corresponding to the second session identifier is determined, so as to reduce a probability of misjudgment by the payment server.

In another feasible implementation manner, the receiver 61 receives, within a preset period of time, the payee account prompt message sent by the second terminal device, so as to reduce time spent by the payment server in determining the second account information corresponding to the second terminal device, where the preset period of time is a preset time interval between a time when the payment server receives the transfer request and a time when the payment server receives the payee account prompt message.

After the receiver 61 receives the transfer confirmation request sent according to the second account information by the first terminal device, specifically, the processor 63 sends a transfer processing request to a transfer processing system, where the transfer processing request includes the first account information, transfer amount information, and the second account information, so that the transfer processing system transfers, from an account corresponding to the first account information to an account corresponding to the second account information, an amount corresponding to the transfer amount information, so as to complete a transfer information processing process.

The payment server provided by this embodiment may be configured to execute the technical solution of the foregoing method embodiments and has a similar implementation principle and similar technical effects, which are not further described herein.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A transfer information processing method, comprising:
sending, by a first terminal device, a transfer request to a payment server, wherein the transfer request comprises a first session identifier, and the first session identifier is used to identify first account information with which login is performed at the first terminal device;
receiving, by the first terminal device, second account information that is sent according to the transfer request by the payment server, wherein the second account information is account information that is determined by the payment server according to the second session identifier after the payment server receives a payee account prompt message that is sent by a second terminal device and that comprises a second session identifier, and the second session identifier is used to identify the second account information with which login is performed at the second terminal device; and
sending, by the first terminal device, a transfer confirmation request to the payment server according to the second account information, so that the payment server performs transfer processing according to the first account information corresponding to the first session identifier, and the second account information.

2. The method according to claim 1, wherein the transfer request further comprises information about a first location where the first terminal device is located; and
the receiving, by the first terminal device, second account information that is sent according to the transfer request by the payment server, wherein the second account information is account information that is determined by the payment server according to the second session identifier after the payment server receives a payee account prompt message that is sent by a second terminal device and that comprises a second session identifier comprises:
receiving, by the first terminal device, the second account information that is sent according to the transfer request by the payment server, wherein the second account information is account information that is determined by the payment server according to the second session identifier, the first location information, and the second location information after the payment server receives a payee account prompt message that is sent by the second terminal device and that comprises the second session identifier and information about a second location where the second terminal device is located, and a distance between the first location information and the second location information is within a preset range.

3. The method according to claim 1 or 2, wherein the sending, by a first terminal device, a transfer request to a payment server comprises:
sending, by the first terminal device, the transfer request to the payment server by means of shaking, turning upside down, or rotating.

4. A transfer information processing method, comprising:
generating, by a second terminal device, a payee account prompt message, wherein the payee account prompt message comprises a second session identifier, and the second session identifier is used to identify second account information with which login is performed at the second terminal device; and
sending, by the second terminal device, the payee account prompt message to a payment server, so that after receiving a transfer request sent by a first terminal device, the payment server determines the second account information according to the second session identifier, and sends the second account information to the first terminal device.

5. The method according to claim 4, wherein the generating, by a second terminal device, a payee account prompt message, wherein the payee account prompt message comprises a second session identifier comprises:
generating, by the second terminal device, a payee account prompt message, wherein the payee account prompt message comprises the second session identifier and information about a second location where the second terminal device is located; and
the sending, by the second terminal device, the payee account prompt message to a payment server, so that after receiving a transfer request sent by a first terminal device, the payment server determines the second account information according to the second session identifier, and sends the second account information to the first terminal device comprises:
sending, by the second terminal device, the payee account prompt message to the payment server, so that after receiving the transfer request that is sent by the first terminal device and that comprises information about a first location where the first terminal device is located, the payment server determines the second account information according to the second session identifier, the first location information, and the second location information, and sends the second account information to the first terminal device, wherein a distance between the first location information and the second location information is within a preset range.

6. The method according to claim 4 or 5, wherein the sending, by the second terminal device, the payee account prompt message to the payment server comprises:
sending, by the second terminal device, the payee account prompt message to the payment server within a preset period of time, wherein the preset period of time is a preset time interval between a time when the payment server receives the transfer request and a time when the payment server receives the payee account prompt message.

7. The method according to any one of claims 4 to 6, wherein the sending, by the second terminal device, the payee account prompt message to the payment server comprises:
sending, by the second terminal device, the payee account prompt message to the payment server by means of shaking, turning upside down, or rotating.

8. A transfer information processing method, comprising:
receiving, by a payment server, a transfer request sent by a first terminal device, wherein the transfer request comprises a first session identifier, and the first session identifier is used to identify first account information with which login is performed at the first terminal device;
receiving, by the payment server, a payee account prompt message sent by a second terminal device, wherein the payee account prompt message comprises a second session identifier, and the second session identifier is used to identify second account information with which login is performed at the second terminal device;
determining, by the payment server, the second account information according to the second session identifier, and sending the second account information to the first terminal device; and
receiving, by the payment server, a transfer confirmation request sent according to the second account information by the first terminal device, and performing transfer processing according to the first account information corresponding to the first session identifier, and the second account information.

9. The method according to claim 8, wherein the transfer request further comprises first location information corresponding to a first location where the first terminal device is located; and the payee account prompt message further comprises second location information corresponding to a second location where the second terminal device is located; and
the determining, by the payment server, the second account information according to the second session identifier, and sending the second account information to the first terminal device comprises:
determining, by the payment server, the second account information according to the second session identifier, the first location information, and the second location information, and sending the second account information to the first terminal device.

10. The method according to claim 9, wherein the determining, by the payment server, the second account information according to the second session identifier, the first location information, and the second location information comprises:
if a distance between the second location information and the first location information is within a preset range, determining the second account information corresponding to the second session identifier.

11. The method according to any one of claims 8 to 10, wherein the receiving, by the payment server, a payee account prompt message sent by a second terminal device comprises:
receiving, by the payment server within a preset period of time, the payee account prompt message sent by the second terminal device, wherein the preset period of time is a preset time interval between a time when the payment server receives the transfer request and a time when the payment server receives the payee account prompt message.

12. The method according to any one of claims 8 to 11, wherein the performing, by the payment server, transfer processing according to the first account information corresponding to the first session identifier, and the second account information comprises:
sending, by the payment server, a transfer processing request to a transfer processing system, wherein the transfer processing request comprises the first account information, transfer amount information, and the second account information, so that the transfer processing system transfers, from an account corresponding to the first account information to an account corresponding to the second account information, an amount corresponding to the transfer amount information.

13. A terminal device, comprising:
a sending module, configured to send a transfer request to a payment server, wherein the transfer request comprises a first session identifier, and the first session identifier is used to identify first account information with which login is performed at a first terminal device;
a receiving module, configured to receive second account information that is sent according to the transfer request by the payment server, wherein the second account information is account information that is determined by the payment server according to the second session identifier after the payment server receives a payee account prompt message that is sent by a second terminal device and that comprises a second session identifier, and the second session identifier is used to identify the second account information with which login is performed at the second terminal device; and
a transfer processing module, configured to send a transfer confirmation request to the payment server according to the second account information, so that the payment server performs transfer processing according to the first account information corresponding to the first session identifier, and the second account information.

14. The terminal device according to claim 13, wherein the transfer request further comprises first location information of the terminal device; and
the receiving module is specifically configured to receive the second account information sent by the payment server, wherein the second account information is account information that is determined by the payment server according to the second session identifier, the first location information, and the second location information after the payment server receives a payee account prompt message that is sent by the second terminal device and that comprises the second session identifier and information about a second location where the second terminal device is located, and a distance between the first location information and the second location information is within a preset range.

15. The terminal device according to any one of claim 13 or 14, wherein the transfer processing module is specifically configured to:
send the transfer request to the payment server by means of shaking, turning upside down, or rotating.

16. A terminal device, comprising:
a prompt message generating module, configured to generate a payee account prompt message, wherein the payee account prompt message comprises a second session identifier, and the second session identifier is used to identify second account information with which login is performed at the second terminal device; and
a sending module, configured to send the payee account prompt message to a payment server, so that after receiving a transfer request sent by a first terminal device, the payment server determines the second account information according to the second session identifier, and sends the second account information to the first terminal device.

17. The terminal device according to claim 16, wherein the prompt message generating module is specifically configured to generate the payee account prompt message, wherein the payee account prompt message comprises the second session identifier and information about a second location where the terminal device is located; and
the sending module is specifically configured to send the payee account prompt message to the payment server, so that after receiving the transfer request that is sent by the first terminal device and that comprises information about a first location where the first terminal device is located, the payment server determines the second account information according to the second session identifier, the first location information, and the second location information, and sends the second account information to the first terminal device, wherein a distance between the first location information and the second location information is within a preset range.

18. The terminal device according to claim 16 or 17, wherein the sending module is specifically configured to send the payee account prompt message to the payment server within a preset period of time, wherein the preset period of time is a preset time interval between a time when the payment server receives the transfer request and a time when the payment server receives the payee account prompt message.

19. The terminal device according to any one of claims 16 to 18, wherein the sending module is specifically configured to:
send the payee account prompt message to the payment server by means of shaking, turning upside down, or rotating.

20. A payment server, comprising:
a receiving module, configured to receive a transfer request sent by a first terminal device, wherein the transfer request comprises a first session identifier, and the first session identifier is used to identify first account information with which login is performed at the first terminal device; and receive a payee account prompt message sent by a second terminal device, wherein the payee account prompt message comprises a second session identifier, and the second session identifier is used to identify second account information with which login is performed at the second terminal device;
a sending module, configured to determine the second account information according to the second session identifier, and send the second account information to the first terminal device; and
a transfer processing module, configured to receive a transfer confirmation request sent according to the second account information by the first terminal device, and perform transfer processing according to the first account information corresponding to the first session identifier, and the second account information.

21. The payment server according to claim 20, wherein the transfer request further comprises first location information corresponding to a first location where the first terminal device is located; and the payee account prompt message further comprises second location information corresponding to a second location where the second terminal device is located; and
the sending module is specifically configured to determine the second account information according to the second session identifier, the first location information, and the second location information, and the sending module sends the second account information to the first terminal device.

22. The payment server according to claim 21, wherein the sending module is specifically configured to:
if a distance between the second location information and the first location information is within a preset range, determine the second account information corresponding to the second session identifier.

23. The payment server according to any one of claims 20 to 22, wherein the receiving module is specifically configured to:
receive, within a preset period of time, the payee account prompt message sent by the second terminal device, wherein the preset period of time is a preset time interval between a time when the payment server receives the transfer request and a time when the payment server receives the payee account prompt message.

24. The payment server according to any one of claims 20 to 23, wherein the transfer processing module is specifically configured to:
send a transfer processing request to a transfer processing system, wherein the transfer processing request comprises the first account information, transfer amount information, and the second account information, so that the transfer processing system transfers, from an account corresponding to the first account information to an account corresponding to the second account information, an amount corresponding to the transfer amount information.
